# EUROPÄISCHE PATENTSCHRIFT

(11) **EP 1 218 120 B1**
(45) Veröffentlichungstag und Bekanntmachung des Hinweises auf die Patenterteilung: **29.12.2004**
(21) Anmeldenummer: 00969421.7
(22) Anmeldetag: 05.10.2000
(51) Int. Cl.: B09C 1/00, C02F 103/06

(54) **VERFAHREN UND VORRICHTUNG ZUR SANIERUNG VON KONTAMINIERTEM GRUNDWASSER**
METHOD AND DEVICE FOR SANITIZING CONTAMINATED GROUND WATER
PROCEDE ET DISPOSITIF D'ASSAINISSEMENT D'EAUX SOUTERRAINES CONTAMINEES

(30) Priorität: 06.10.1999 DE 19948828
(43) Veröffentlichungstag der Anmeldung: 03.07.2002
(73) Patentinhaber: UFZ-UMWELTFORSCHUNGSZENTRUM Leipzig-Halle GmbH, 04318 Leipzig (DE)
(72) Erfinder: TEUTSCH, Georg, 72827 Wannweil (DE); WEISS, Holger, 04457 Bahlsdorf (DE); SCHIRMER, Mario, 04318 Leipzig (DE)
(74) Vertreter: Gulde, Klaus W.
(86) Internationale Anmeldenummer: PCT/EP2000/009740
(87) Internationale Veröffentlichungsnummer: WO 2001/024952

(56) Entgegenhaltungen:
- WO-A-93/22241
- DE-A- 19 622 159
- DE-A- 19 715 038
- DE-C- 4 226 871
- US-A- 5 122 165
- US-A- 5 354 149
- US-A- 5 551 807

## Beschreibung

Die Erfindung bezieht sich auf ein Verfahren und eine Vorrichtung zur Sanierung von kontaminiertem Grundwasser gemäß den Oberbegriffen der Ansprüche 1 und 10.

An kontaminierten Standorten, wo der Schadensherd nicht lokalisierbar ist um ausgegraben oder eingekapselt zu werden, ist die heute am häufigsten praktizierte Maßnahme der Grundwassersanierung das Abpumpen des kontaminierten Wassers im Abstrom des Schadensherdes mit anschließender Reinigung ("pump-and-treat").

Diese hydraulische Grundwassersanierung hat sich in der Praxis aber in vielen Fällen als uneffektiv erwiesen. Aufgrund der oft geringen Löslichkeit, z. B. hydrophober organischer Substanzen, dem Vorhandensein einer residualen Schadstoffphase, der ungleichmäßigen Durchströmung des heterogenen Untergrundes sowie der unter Umständen langsamen Rückdiffusion der häufig über Jahrzehnte in die Aquifermatrix eingedrungenen Schadstoffe kann die rein hydraulische Sanierung oft nur unbefriedigende Reinigungsleistungen erzielen.

Um die Nachteile der "pump-and-treat"-verfahren zu minimieren wird seit Jahren intensiv an der Entwicklung von In-situ-Sanierungsmaßnahmen gearbeitet. Auf der einen Seite werden Dichtwände ("funnel") installiert, um den Grundwasserstrom zu fokussieren und zum anderen werden durchlässige Wände ("gates") eingebaut, um das durchfließende Grundwasser zu behandeln ("funnel-and-gate" System). Die "funnel-and-gate"-Systeme gehören zu den passiven Technologien, wobei die Schadstoffe z. B. in Absorberwänden immobilisiert oder in Reaktionswänden abgebaut werden. Der Vorteil dieser Technologie liegt vor allem darin, daß sie nahezu ohne externe Energiezufuhr arbeitet. Allerdings hat sich herausgestellt, daß nur bestimmte Stoffe oder Stoffgruppen von den Wänden behandelt werden können, was besonders bei komplexen Kontaminationen von erheblichem Nachteil sein kann.

Um die Nachteile der passiven "funnel-and-gate"-Systeme zu überkommen, werden seit einiger Zeit zusätzlich aktive Sanierungsmaßnahmen durchgeführt, die helfen einen oder mehrere der für den Abbau limitierenden Faktoren zu überkommen. So werden z. B. mittels Sauerstoffzufuhr oder dem Einpumpen von Nährlösungen versucht, den Schadstoffabbau in situ anzuregen oder weiter zu forcieren. Der entscheidende Faktor der Effizienz dieser Methode liegt aber in der Vermischung des kontaminierten Wassers mit den eingepumpten Substanzen. Es dauert sehr lange, bis sich das langsam und laminar fließende Grundwasser mit den z. B. über Injektionslanzen oder Infiltrationsbrunnen zugeführten Stoffen vermischt und besonders in heterogenen Grundwasserleitern mit bevorzugten Fließwegen erfolgt oft nur eine unzureichende Vermischung.

In der DE 196 22 159 A1 ist eine Vorrichtung zur Boden- und Grundwassersanierung und Verfahren zum Erstellen und Betreiben einer solchen Vorrichtung beschrieben.
Die Vorrichtung besteht aus einer vertikal im Aquifer-Bereich angeordneten Dichtwand, in die ein sogenanntes, durchströmbares Durchlaßbauwerk eingesetzt ist. Im Durchlaßbauwerk ist die Behandlung des kontaminierten Grundwassers möglich. Das Durchlaßbauwerk ist über die gesamte vertikale Ausdehnung des Aquifer-Bereiches in die Dichtwand eingebaut und mit dieser dicht und fest verankert.

In einer Ausführungsform der dort beschriebenen Vorrichtung ist ein Ingenieurbauwerk vorgesehen, das im wesentlichen vertikal durchströmt wird. Dazu sind die quer zur Fließrichtung orientierten Seitenwände sowie die Trennwände im Wesentlichem wasserdicht ausgebildet, so dass das anströmende Grundwasser an der entstandenen Dichtwand nach oben und über diese Wand hinweg geleitet wird und dann mäanderartig vertikal durch das Ingenieurbauwerk geführt wird. Diese vertikale, mäanderartig geführte Strömung durch den Behandlungsbereich hat den Nachteil, dass der Behandlungsbereich von der Oberfläche her nur schwer zugänglich ist.

In einem weiteren bekanntgewordenen Grundwassersanierungsverfahren wird das kontaminierte Grundwasser in einer beliebigen Höhe unterhalb des Grundwasserspiegels in einen Reaktor eingeleitet und durch eine Reaktionskammer mit mindestens einem Reaktionsmittel in Abhängigkeit von der gewünschten Verweilzeit geführt, und als gereinigtes Grundwasser in einer gewünschten Höhe aus dem Reaktor abgeleitet. Die Höhe der Einleitung des kontaminierten Grundwassers in den Reaktor ist von der Schadstoffart und der Schadstofflage innerhalb der Grundwasserströmung wählbar. Das kontaminierte Grundwasser strömt hierbei vertikal durch einen als Reaktor ausgebildeten Senkschacht. Die Nachteile dieses Verfahrens bestehen darin, daß der Reaktor nach einer an sich bekannten Senkschacht-Technologie bis in die Sohle des Horizontes hinein eingebracht werden muß, in dem das kontaminierte Grundwasser geführt ist, so daß größere Grundwasserströme nur durch die Verbindung mehrerer Brunnen über undurchlässige Wände erreicht werden kann. Das bedeutet, daß der Dekontaminationsaufwand hier besonders hoch ist.

Der Erfindung liegt die Aufgabe zugrunde, eine kostenarme hydraulische Grundwassersanierungsmethode anzubieten, bei der durch die Anordnung von Dichtwänden Grundwasserströme ohne externe Energiezuführung fokussiert werden können und gleichzeitig eine Möglichkeit zu schaffen, in einer gut zugänglichen vermischungszone ein oder mehrere Zusatzmittel mit dem kontaminierten Grundwasser intensiv zu durchmischen und anschließend wieder dem Grundwasserstrom zuzuführen.

Erfindungsgemäß wird diese Aufgabe mit den kennzeichnenden Merkmalen der Ansprüche 1 und 10 gelöst.

Vorteilhafte Weiterbildungen der Erfindung sind Gegenstand der abhängigen Ansprüche.

Bei diesem Verfahren wird vorteilhafterweise die Hydraulik der Grundwasserströmung ausgenutzt, um ohne externe Energiezufuhr das Grundwasser in eine unterhalb der Geländeoberkante angeordneten Behandlungskammer zu heben. Dazu wird im Bereich der Grundwasserströmung eine undurchlässige Dichtwand errichtet, die dem anströmenden Grundwasser als Barriere entgegengesetzt wird. Unmittelbar anströmungsseitig der Dichtwand wird eine hochdurchlässige Schicht eingebaut, die dem Grundwasser als bevorzugter Fließweg dient. Über diese hochdurchlässige Schicht wird das anströmende Grundwasser in eine Behandlungskammer geleitet. Die Behandlungskammer kann z.B. als gemauerter Raum, der ggf. mit Edelstahl ausgekleidet sein kann, oder als Edelstahlkonstruktion ausgeführt sein. Die notwendigen zusatzmittel, die den Schadstoffabbau in Gang setzen und/oder beschleunigen, werden hier hinzugesetzt bzw. angeordnet.

Als Zusatzmittel werden z. B. Elektronenakzeptoren wie Sauerstoff oder Nitrat, Nährstoffe für Mikroorganismen, Mikroorganismen selbst oder auch UV-Quellen eingesetzt. Bei den Elektronenakzeptoren und Nährstoffen ist es in der Regel zweckmäßig diese bereits in der Nähe des Einlaufes der Behandlungskammer dem Grundwasserstrom zuzugeben. Dies ermöglicht eine längere Vermischungsstrecke innerhalb der Behandlungskammer. Die Mikroorganismen, die dem Grundwasserstrom zugegeben werden, injiziert man zweckmäßigerweise nahe des Ausflusses der Behandlungskammer. Der Grund dafür ist, daß die Mikroorganismen durch den Grundwasserstrom an die Stellen im Grundwasserleiter transportiert werden, wo der Abbau stattfinden soll. Dies sind in der Regel die höher durchlässigen Bereiche des Aquifer-Bereiches.

Für bestimmte Kontaminationen des Grundwassers ist in einer Weiterbildung der Erfindung vorgesehen, in der Behandlungskammer turbulente Strömungsverhältnisse zu schaffen, um einen besonders intensiven Kontakt des Grundwassers mit den eingebrachten Zusatzmitteln zu erreichen. Wichtig für die Wechselwirkungen zwischen den Kontaminanten im Grundwasser und den Zusatzmitteln ist auch die Verweilzeit in der Behandlungskammer, die durch zusätzliche Einbauten beeinflußt werden kann.

In der Mischkammer soll es zu einer möglichst guten Vermischung des Grundwassers mit den zugegebenen Stoffen kommen. Eingebrachte Rührer, wie z. B. Schaufelräder, können helfen, turbulente Strömungen zu erzeugen. Schaufelräder, welche ohne Energiezufuhr von außen in der Rinne angebracht sind und durch das fließende Grundwasser angetrieben werden, können auch helfen, Turbulenzen im Grundwasser zu erzeugen.

In einer weiteren Ausgestaltung der Erfindung ist vorgesehen, daß die Behandlungskammer zweiteilig angelegt ist. Das aus der hochdurchlässigen Schicht in die Behandlungskammer eintretende Grundwasser wird zuerst in eine sogenannte Mischkammer geführt und von dort aus in eine Reaktionskammer. Das macht es möglich, die Teilkammern den entsprechenden Kontaminanten anzupassen.

Der Misch- und Reaktionskammerbereich kann zweckmäßigerweise so gestaltet werden, daß dieser luftdicht abschließbar ist, sofern anaerobe Bedingungen gewünscht werden.

Es ist ein weiterer Vorteil der Erfindung, daß in der begehbaren Behandlungskammer Meßinstrumente und Sensoren zur Beobachtung des Kontaminationszustandes der Grundwasserströmung installiert werden können.

Falls mehrere Schadstoffgruppen im Grundwasserstrom mit Hilfe der Vorrichtung behandelt werden, kann es zweckmäßig sein, gemäß der Ausgestaltung des Anspruches 8 mehrere Misch- und Reaktionskammersysteme hintereinander zu schalten, so daß Zusatzmittel räumlich nacheinander den Grundwasserstrom zugeführt werden können. Wenn z. B. CKW-(Chlorkohlenwasserstoff-) und BTEX-(Benzol, Toluol, Ethylbenzol und die Xylole) kontaminiertes und anaerobes Grundwasser in die erste Mischkammer fließt, kann durch Zumischen geeigneter Substanzen und/oder dem Füllen der Kammer mit z.B. Eisenspänen bzw. Eisenspänen/Sandgemischen zunächst eine anaerobe Dehalogenierung angeregt werden, welche in der ersten Reaktionskammer stattfindet und in der dahintergeschalteten zweiten Mischkammer erfolgt eine Sauerstoffzufuhr, um den aeroben BTEX-Abbau zu forcieren.

Um z.B. hydrophobe Stoffe aus dem Grundwasserstrom zu entfernen, kann die Reaktionskammer auch zweckmäßigerweise absorbierendes Material, wie z.B. Aktivkohle, enthalten. In diesem Sinne wirkt dann die Reaktionskammer ähnlich einer Absorberwand, bei der die hydrophoben Stoffe zurückgehalten oder stark retardiert werden. Gegebenenfalls kann das absorbierende Material von Zeit zu Zeit ausgetauscht werden.

Die Reaktionskammer kann befüllt oder auch unbefüllt sein. Wenn z.B. UV-Strahlung eingesetzt wird um Schadstoffe über photolytische Reaktionen abzubauen, ist es vorteilhaft, wenn die Reaktionskammer unbefüllt ist und nur das fließende Grundwasser enthält. In diesem Fall wird der Grundwasserstrom an einer UV-Quelle vorbeigeleitet.

Nachdem das Grundwasser die Behandlungskammer bzw. die Reaktionskammer verlassen hat, wird es über eine Infiltrationsgalerie zurück in den Aquifer-Bereich geführt. Die Infiltrationsgalerie kann als Filterkiesbereich oder als Infiltrationsbrunnen ausgebildet sein. Somit wird das Grundwasser nie über die Geländeoberkante gehoben. Der abstromige Grundwasserleiter wirkt dann weiterhin als Reaktionsraum, in dem alle für den Schadstoffabbau notwendigen Substanzen gut gemischt vorliegen.

Die Erfindung wird anhand von Ausführungsbeispielen und einer Zeichnung näher erläutert.

Es zeigen
- Fig.1: eine schematische Querschnittsdarstellung der Vorrichtung,
- Fig.2: eine schematische Darstellung mit Misch- und Reaktionskammer,
- Fig.3: eine schematische Draufsicht der Vorrichtung,
- Fig.4: eine schematische Draufsicht mit Infiltrationsbrunnen und
- Fig.5: eine schematische Draufsicht der Mischkammer und
- Fig.6: eine Kombination mehrerer Misch- und Reaktionskammern.

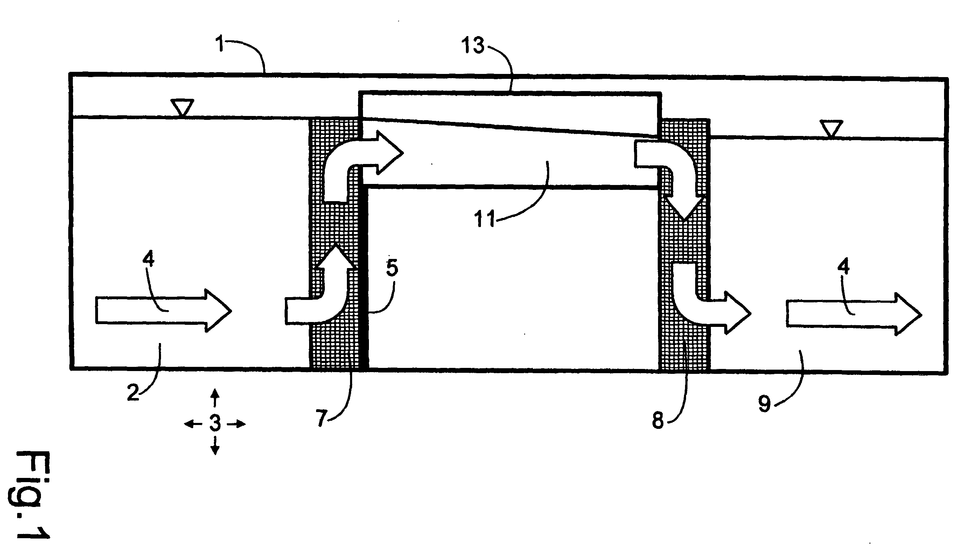

In Fig. 1 ist im schematischen Vertikalschnitt die erfindungsgemäße Vorrichtung dargestellt. In einem Aquifer-Bereich 2, der nach unten durch einen Aquitard-Bereich 3 begrenzt wird, ist quer zur Grundwasserströmung 4 eine Spundwand 5 angeordnet. Anströmungsseitig ist eine hochdurchlässige Filterkiesschicht 7 über die gesamte Fläche der Spundwand 5 eingebracht. Unterhalb der Geländeoberkante 1, in Strömungsrichtung gesehen hinter der Spundwand, ist eine Behandlungskammer 11 angeordnet. Die Behandlungskammer 11 ist begehbar und von der Geländeoberkante aus zugänglich. Nach der Behandlungskammer 11 ist ein Infiltrationsbereich 8 vorgesehen, an den sich eine Reaktionszone 9 anschließt. Die Behandlungskammer 11 weist eine Abdeckung 13 auf.

Die Grundwasserströmung 4 trifft auf die hochdurchlässige Filterkiesschicht 7 und wird dann fokussierend in den Eingangsbereich der Behandlungskammer 11 geführt. Nach dem Inkontaktbringen mit Zusatzmitteln wird in horizontaler Richtung die Grundwasserströmung 4 in den Infiltrationsbereich 8 ausgetragen und von dort dem Aquifer-Bereich 2 zugeführt, der in seinem Anfangsteil als Reaktionszone 9 fungiert.

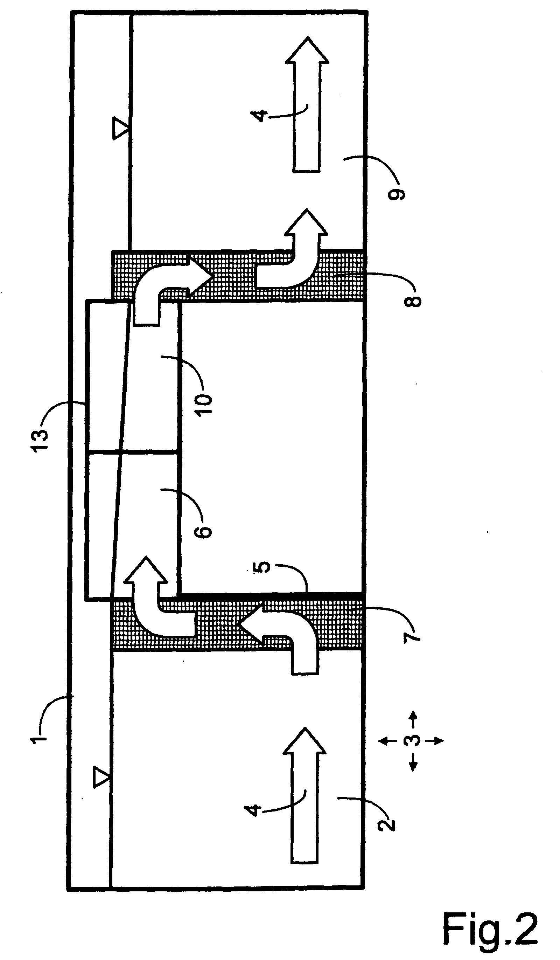

Fig. 2 zeigt eine zweigeteilte Behandlungskammer 11. Sie besteht aus der Mischkammer 6 und der Reaktionskammer 10. Aufgrund des Vorsehens einer Reaktionskammer 10 in der Behandlungskammer 11 kann die im abstromigen Aquifer-Bereich 2 gemäß Fig. 1 vorgesehene Reaktionszone 9 in die Reaktionskammer 10 vorverlegt bzw. zusätzliche Reaktionsräume geschaffen werden.

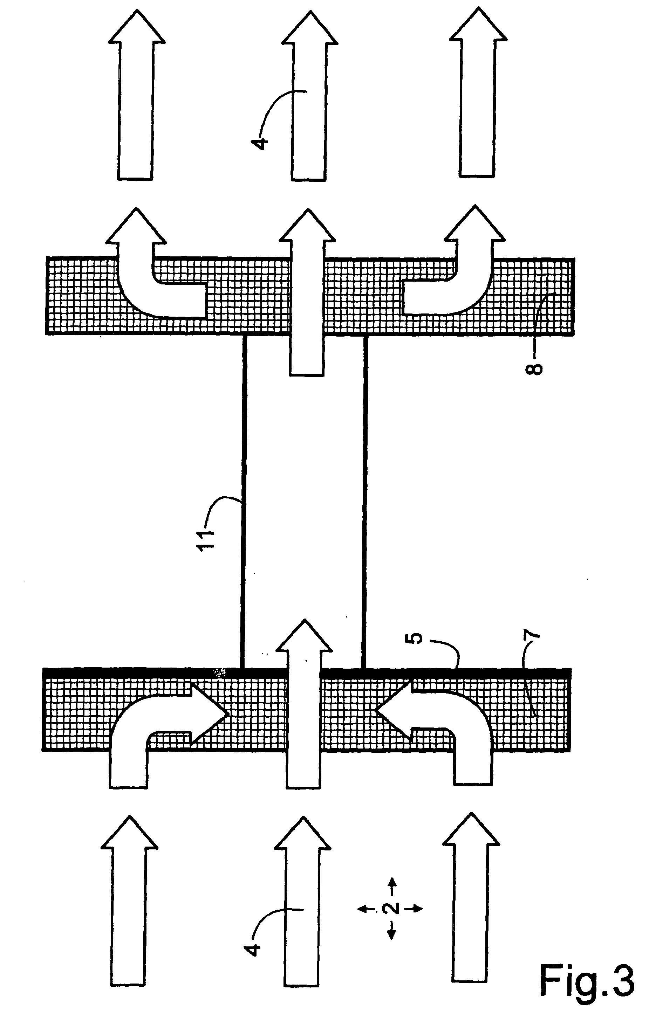

Fig. 3 zeigt die erfindungsgemäße Vorrichtung in schematischer Draufsicht. Die Grundwasserströmung 4 wird in der Filterkiesschicht 7 praktisch fokussiert und in die Behandlungskammer 11 geführt und dort mit den Zusatzmitteln, die der Beseitigung der Kontaminationen dienen, in Kontakt gebracht. Nach der horizontalen Weiterführung der Grundwasserströmung 4 erfolgt über den Infiltrationsbereich 8 eine Überführung der Grundwasserströmung 4 in den Aquifer-Bereich 2.

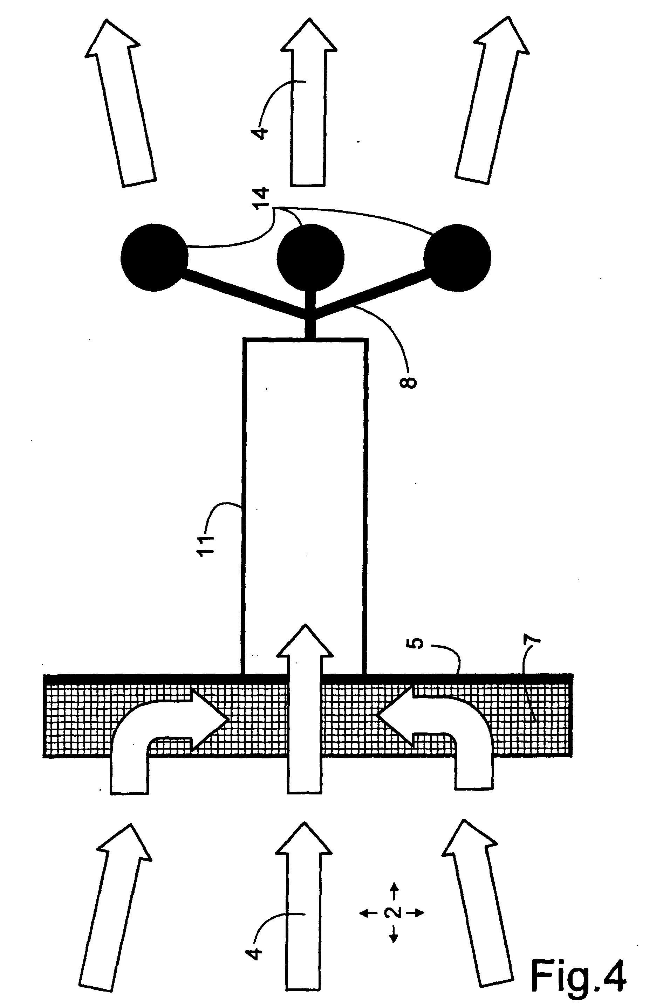

Gemäß Fig. 4 ist der Infiltrationsbereich 8 mit Infiltrationsbrunnen 14 kombiniert.

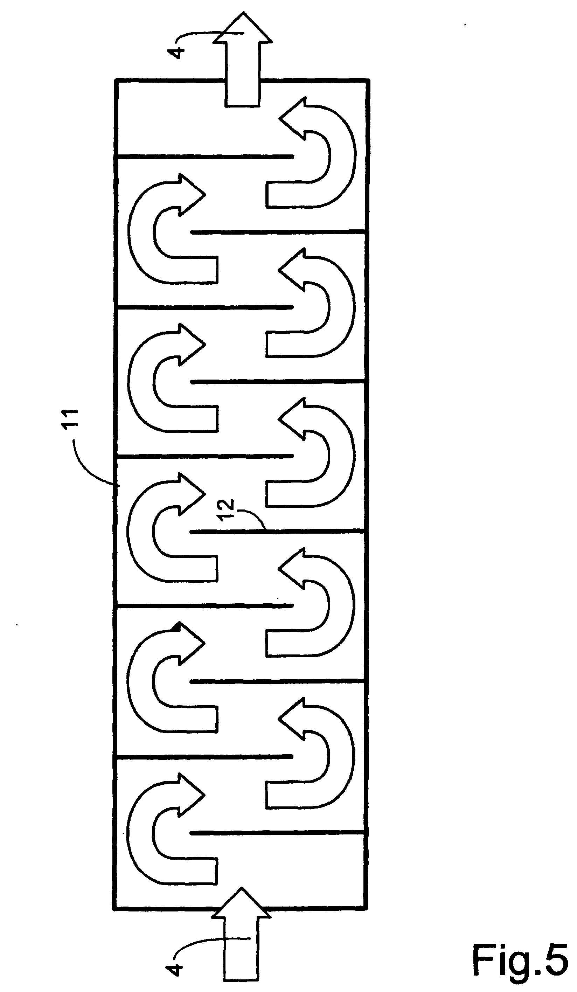

In der Draufsicht der Behandlungskammer 11 gemäß Fig. 5 ist beispielhaft die Grundwasserströmung 4 in der Behandlungskammer 11 dargestellt. Die hier angedeuteten Einbauten 12 dienen der Verweilzeit-Einstellung und der Erzeugung von Turbulenzen.

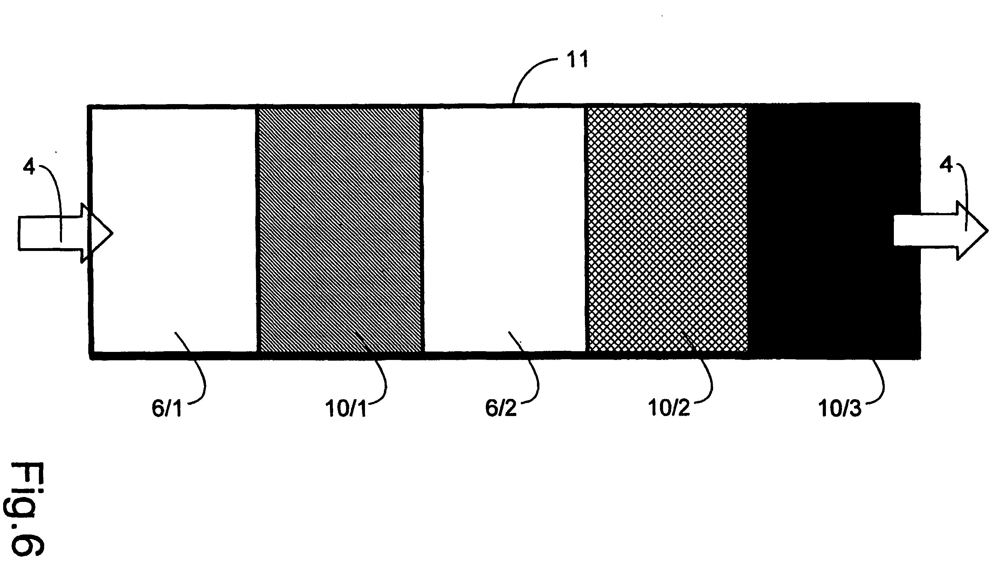

In Fig. 6 wird eine Behandlungskammer 11 mit mehreren Misch- und Reaktionskammern dargestellt. Die Grundwasserströmung 4 tritt in eine Mischkammer 6/1 ein, in der durch Zugabe geeigneter Zusatzmittel eine pH-Wert-Pufferung erfolgt. Die daran sich anschließende Reaktionskammer 10/1 enthält Eisenspäne zur Dehalogenierung von Chlorkohlenwasserstoffen in der Grundwasserströmung 4. In einer weiteren Mischkammer 6/2 erfolgt eine Sauerstoffanreicherung während die Reaktionskammer 10/2 eine Sandfüllung aufweist, in der ein aerober BTEX-Abbau stattfindet.
Die dann folgende Reaktionskammer 10/3 ist mit einem Absorptionsmedium, in diesem Fall Aktivkohle, zur Absorption von hydrophoben Stoffen ausgestattet. Die Ausgestaltung der Behandlungskammer 11 richtet sich im wesentlichen nach der Art und Menge der in der Grundwasserströmung 4 vorhandenen Kontaminanten.

### Bezugszeichenliste

- 1: Geländeoberkante
- 2: Aquifer-Bereich
- 3: Aquitard-Bereich
- 4: Grundwasserströmung
- 5: Spundwand
- 6: Mischkammer
- 7: Filterkiesschicht
- 8: Infiltrationsbereich
- 9: Reaktionszone
- 10: Reaktionskammer
- 11: Behandlungskammer
- 12: Einbauten
- 13: Abdeckung
- 14: Infiltrationsbrunnen

## Patentansprüche

1. Verfahren zur Sanierung von kontaminiertem Grundwasser durch In-situ-Behandlung mit Zusatzmitteln und anschlieβender Rückführung über einen Infiltrationsbereich in den Aquifer-Bereich, wobei eine kontaminierte, in den Aquifer-Bereich fließende Grundwasserströmung mittels einer Kombination aus einer Dichtwandanordnung und einer hochdurchlässigen Schicht ohne externe Energiezufuhr angehoben wird,
**dadurch gekennzeichnet, daß**
die Grundwasserströmung (4) oberhalb der Dichtwandanordnung (5) in einen dort befindlichen Behandlungsbereich (11) eingeleitet und horizontal weitergeführt wird.

2. Verfahren nach Anspruch 1,
**dadurch gekennzeichnet, daß**
im Behandlungsbereich (11) mittels Rührer und/oder hydraulischer Maßnahmen turbulente Strömungen erzeugt werden.

3. Verfahren nach Anspruch 1 oder 2,
**dadurch gekennzeichnet, daß**
die Grundwasserströmung (4) innerhalb des Behandlungsbereiches (11) durch einen Mischbereich (6) und durch einen Reaktionsbereich (10) geführt wird.

4. Verfahren nach einem der Ansprüche 1 bis 3,
**dadurch gekennzeichnet, daß**
in der hochdurchlässigen Schicht (7) und im Infiltrationsbereich (8) Filterkies eingesetzt wird.

5. Verfahren nach einem der Ansprüche 1 bis 4,
**dadurch gekennzeichnet, daß**
als Zusatzmittel Elektronenakzeptoren wie Sauerstoff oder Nitrat, Nährstoffe für Mikroorganismen öder Mikroorganismen selbst eingesetzt werden.

6. Verfahren nach einem der Ansprüche 1 bis 5,
**dadurch gekennzeichnet, daß**
im Behandlungsbereich ein von der Geländeoberkante (1) zugängliche Behandlungskammer (11) mit Ein- und Ausfluß eingesetzt wird.

7. Verfahren nach einem der Ansprüche 1 bis 6,
**dadurch gekennzeichnet, daß**
zur Verlängerung der Verweilzeit der Grundwasserströmung (4) in der Behandlungskammer (11) Einbauten (12) eingesetzt werden.

8. Verfahren nach einem der Ansprüche 1 bis 7,
**dadurch gekennzeichnet, daß**
die Grundwasserströmung (4) durch mehrere hintereinander geschaltete Behandlungskammern (11), die ggf. aus Mischund Reaktionskammern (6, 10) bestehen, geführt wird.

9. Verfahren nach einem der Ansprüche 1 bis 8,
**dadurch gekennzeichnet, daß**
die Grundwasserströmung (4) innerhalb der Behandlungskammer (11) an einer Strahlungsquelle, wie einer UV-Lichtquelle, vorbeigeführt wird.

10. Vorrichtung zur Sanierung von kontaminiertem Grundwasser durch In-situ-Behandlung mit Zusatzmitteln, bestehend durch einer Dichtwand, einer Behandlungskammer sowie Infiltrationsbereichen, wobei
im Aquifer-Bereich (2) einer Grundwasserströmung (4), eine oder mehrere Dichtwände (5) quer und vertikal zur Strömungsrichtung angeordnet sind, die anströmungsseitig hochdurchlässige Schichten (7) aufweisen, **dadurch gekennzeichnet, daß**
unmittelbar oberhalb der Dichtwand (5) abströmungsseitig die Behandlungskammer (11) horizontal angeordnet ist.

11. Vorrichtung nach Anspruch 10,
**dadurch gekennzeichnet, daß**
die hochdurchlässige Schicht (7) mit der Behandlungskammer (11) verbunden ist.

12. Vorrichtung nach Anspruch 10 oder 11,
**dadurch gekennzeichnet, daß**
die Behandlungskammer (11) unterhalb der Geländeoberkante (1) angeordnet und von der Geländeoberkante (1) aus zugänglich ist.

13. Vorrichtung nach einem der Ansprüche 10 bis 12,
**dadurch gekennzeichnet, daß**
die Behandlungskammer (11) zweiteilig als Mischkammer (6) und Reaktionskammer (10) ausgebildet ist.

14. Vorrichtung nach einem der Ansprüche 10 bis 13,
**dadurch gekennzeichnet, daß**
die hochdurchlässige Schicht (7) und der Infiltrationsbereich (8) als Filterkieswand und/oder als Infiltrationsbrunnen ausgebildet sind.

15. Vorrichtung nach einem der Ansprüche 10 bis 14,
**dadurch.gekennzeichnet, daß**
die Dichtwand (5) als Spundwand ausgebildet ist.

16. Vorrichtung nach einem der Ansprüche 10 bis 15,
**dadurch gekennzeichnet, daß**
die Behandlungskammer (11) Turbulenzen erzeugende und/oder die Verweilzeit verlängernde Elemente wie Rührer und/oder Einbauten aufweist.

17. Vorrichtung nach einem der Ansprüche 10 bis 16,
**dadurch gekennzeichnet, daß**
in der Behandlungskammer (11) eine Strahlungsquelle, wie eine UV-Quelle, angeordnet ist.

18. Vorrichtung nach einem der Ansprüche 10 bis 17,
**dadurch gekennzeichnet, daß**
die Behandlungskammer (11) mit Sensorik und Meßeinrichtungen ausgestattet ist.

## Claims

1. A method for the sanitary treatment of contaminated groundwater by means of in-situ treatment with additives followed by its return via an infiltration area into the aquifer area, a contaminated groundwater flow which flows into the aquifer area being raised by means of a combination of a sealing wall arrangement and a highly permeable layer without an external energy supply
**characterised in that**
the groundwater flow (4) is introduced above the sealing wall arrangement (5) into a treatment area (11) located there and is carried on in a horizontal direction.

2. A method according to claim 1
**characterised in that**
eddy-motions are created in the treatment area (11) by means of agitators and/or by hydraulic measures.

3. A method according to claim 1 or 2
**characterised in that**
the groundwater flow (4) within the treatment area (11) is routed through a mixing area (6) and through a reaction area (10)

4. A method according to any one of claims 1 to 3
**characterised in that**
filter gravel is used in the highly permeable layer (7) and in the infiltration area (8).

5. A method according to any one of claims 1 to 4
**characterised in that**
electron acceptors such as oxygen or nitrate, nutrients for micro-organisms or micro-organisms themselves are used as additives.

6. A method according to any one of claims 1 to 5
**characterised in that**
in the treatment area a treatment chamber (11) with inflow and outflow is used which is accessible from the surface of the terrain (1).

7. A method according to any one of claims 1 to 6
**characterised in that**
installations (12) are used for prolonging the retention time of the groundwater flow (4) in the treatment chamber (11).

8. A method according to any one of claims 1 to 7
**characterised in that**
the groundwater flow (4) is routed through several treatment chambers (11) arranged one behind the other which, if appropriate, consist of mixing chambers and reaction chambers (6, 10).

9. A method according to any one of claims 1 to 8
**characterised in that**
the groundwater flow (4) within the treatment chamber (11) is carried past a radiation source, such as a UV light source.

10. A device for the sanitary treatment of contaminated groundwater by means of the in-situ treatment with additives which consists of a sealing wall, a treatment chamber and an infiltration area wherein
in the aquifer area (2) of a groundwater flow (4) one or several sealing walls (5) are arranged transversely and vertically to the flow direction which on the inflow side are provided with highly permeable layers (7) **characterised in that** the treatment chamber (11) is horizontally arranged on the outflow side directly above the sealing wall (5).

11. A device according to claim 10
**characterised in that** the highly permeable layer (7) is connected with the treatment chamber (11).

12. A device according to claim 10 or 11
**characterised in that**
the treatment chamber (11) is arranged below the surface of the terrain (1) and is accessible from the surface of the terrain (1).

13. A device according to any one of claims 10 to 12
**characterised in that**
the treatment chamber (11) consists of two compartments, a mixing chamber (6) and a reaction chamber (10).

14. A device according to any one of claims 10 to 13
**characterised in that**
the highly permeable layer (7) and the infiltration area (8) are provided as a filter gravel wall and/or as an infiltration well.

15. A device according to any one of claims 10 to 14
**characterised in that**
the sealing wall (5) is provided as a cut-off wall.

16. A device according to any one of claims 10 to 15
**characterised in that**
the treatment chamber (11) is provided with elements such as agitators and/or installations which create turbulence and/or prolong the retention time.

17. A device according to any one of claims 10 to 16
**characterised in that**
the treatment chamber (11) is provided with a radiation source, such as a UV source.

18. A device according to any one of claims 10 to 17
**characterised in that**
the treatment chamber (11) is equipped with sensors and measuring instruments.

## Revendications

1. Procédé pour l'épuration d'eau souterraine contaminée par traitement sur site avec des adjuvants et retour consécutif dans la zone aquifère via une zone d'infiltration, où un courant d'eau souterraine contaminée s'écoulant dans la zone aquifère est élevé sans apport d'énergie externe au moyen d'une combinaison d'un rideau étanche et d'une couche hautement perméable,
**caractérisé en ce que**
le courant d'eau souterraine (4) est introduit et horizontalement conduit dans une zone de traitement (11) située au-dessus du rideau étanche (5).

2. Procédé selon la revendication 1,
**caractérisé en ce que**
des turbulences sont générées dans la zone de traitement (11) par des agitateurs et/ou des moyens hydrauliques.

3. Procédé selon la revendication 1 ou 2,
**caractérisé en ce que**
le courant d'eau souterraine (4) est conduit au travers d'une zone de mélange (6) et d'une zone de réaction (10) à l'intérieur de la zone de traitement (11).

4. Procédé selon l'une des revendications 1 à 3,
**caractérisé en ce que**
des graviers filtrants sont présents dans la couche hautement perméable (7) et dans la zone d'infiltration (8).

5. Procédé selon l'une des revendications 1 à 4,
**caractérisé en ce que**
des accepteurs d'électrons tels que l'oxygène ou le nitrate, des nutriments pour les micro-organismes ou des micro-organismes en tant que tels sont utilisés comme adjuvants.

6. Procédé selon l'une des revendications 1 à 5,
**caractérisé en ce qu'**
une chambre de traitement (11) avec une admission et une décharge, accessible depuis la limite supérieure du terrain (1), est présente dans la zone de traitement.

7. Procédé selon l'une des revendications 1 à 6,
**caractérisé en ce que**
des chicanes (12) sont présentes dans la chambre de traitement (11) pour y prolonger le temps de passage du courant d'eau souterraine (4).

8. Procédé selon l'une des revendications 1 à 7,
**caractérisé en ce que**
le courant d'eau souterraine (4) est conduit au travers de plusieurs chambres de traitement (11) successives, éventuellement composées de chambres de mélange et de réaction (6, 10).

9. Procédé selon l'une des revendications 1 à 8,
**caractérisé en ce que**
le courant d'eau souterraine (4) passe contre une source de rayons, telle une source lumineuse UV à l'intérieur de la chambre de traitement (11).

10. Dispositif pour l'épuration d'eau souterraine contaminée par traitement sur site avec des adjuvants, comprenant un rideau étanche, une chambre de traitement et des zones d'infiltration, où, dans la zone aquifère (2) d'un courant d'eau souterraine (4), un ou plusieurs rideaux étanches (5) sont disposés transversalement et verticalement par rapport au sens du courant, présentant des couches hautement perméables (7) sur le côté contre le courant,
**caractérisé en ce que**
la chambre de traitement (11) est disposée horizontalement immédiatement au-dessus du rideau étanche (5) dans le sens d'écoulement du courant.

11. Dispositif selon la revendication 10,
**caractérisé en ce que**
la couche hautement perméable (7) est reliée à la chambre de traitement (11).

12. Dispositif selon la revendication 10 ou 11,
**caractérisé en ce que**
la chambre de traitement (11) est située sous la limite supérieure du terrain (1) et accessible depuis la limite supérieure du terrain (1).

13. Dispositif selon l'une des revendications 10 à 12,
**caractérisé en ce que**
la chambre de traitement (11) est subdivisée en deux parties, une chambre de mélange (6) et une chambre de réaction (10).

14. Dispositif selon l'une des revendications 10 à 13,
**caractérisé en ce que**
la couche hautement perméable (7) et la zone d'infiltration (8) sont formées comme rideau à graviers filtrants et/ou comme puits d'infiltration.

15. Dispositif selon l'une des revendications 10 à 14,
**caractérisé en ce que**
le rideau étanche (5) est formé comme rideau de palplanches.

16. Dispositif selon l'une des revendications 10 à 15,
**caractérisé en ce que**
la chambre de traitement (11) présente des éléments générateurs de turbulences et/ou prolongateurs du temps de passage tels qu'agitateurs et/ou chicanes.

17. Dispositif selon l'une des revendications 10 à 16,
**caractérisé en ce qu'**
une source de rayons, telle une source UV, est disposée dans la chambre de traitement (11).

18. Dispositif selon l'une des revendications 10 à 17,
**caractérisé en ce que**
la chambre de traitement (11) est équipée de senseurs et de dispositifs de mesure.
